# EUROPÄISCHE PATENTSCHRIFT

(11) **EP 1 182 376 B1**
(45) Veröffentlichungstag und Bekanntmachung des Hinweises auf die Patenterteilung: **28.03.2007**
(21) Anmeldenummer: 01120045.8
(22) Anmeldetag: 21.08.2001
(51) Int. Cl.: F16H 63/18, F16H 3/089

(54) **Automatisierter Kraftfahrzeugantriebsstrang**
Automated drive train for vehicle
Train d'entraînement automatisé pour véhicule

(30) Priorität: 22.08.2000 DE 10041288
(43) Veröffentlichungstag der Anmeldung: 27.02.2002
(73) Patentinhaber: GETRAG Getriebe- und Zahnradfabrik Hermann Hagenmeyer GmbH & Cie KG, 74199 Untergruppenbach (DE)
(72) Erfinder: Diel, Henning, 71636 Ludwigsburg (DE); Rühle, Günter, 74369 Löchgau (DE)
(74) Vertreter: Steil, Christian

(56) Entgegenhaltungen:
- EP-A- 0 997 227
- DE-A1- 19 920 440
- DE-A1- 19 924 335
- US-A- 6 003 649

## Beschreibung

Die vorliegende Erfindung betrifft einen automatischen Kraftfahrzeugantriebsstrang gemäß dem Oberbegriff des Anspruchs 1, wie er aus der US-A-6,003,649 bekannt geworden ist. Dieses Dokument wird als nächstliegender Stand der Technik angesehen.

Die vorliegende Erfindung betrifft generell einen automatisierten Kraftfahrzeugantriebsstrang, mit einer Anfahr- und Trennkupplung und einem Stufengetriebe, das eine Mehrzahl von Radsätzen zur formschlüssigen Bildung von Gangstufen aufweist, wobei das Stufengetriebe eine Aktuatoranordnung mit wenigstens einer Schaltwalze aufweist, die mit einem Zahnrad verbunden ist, das mit einem Elektromotor zum Drehantrieb der Schaltwalze gekoppelt ist.

Ein derartiger automatisierter Kraftfahrzeugantriebsstrang ist bspw. bekannt aus der DE 196 12 690 C1.

Bei dem bekannten Antriebsstrang ist die eine Schaltwalze mit mehreren Umfangsspuren versehen. Der Antriebsstrang arbeitet rein sequentiell, ähnlich einem Motorradgetriebe.

Der Elektromotor zum Drehantrieb der Schaltwalze ist parallel zu der Schaltwalze angeordnet. Um die erforderliche Übersetzung zwischen der Abtriebswelle des Elektromotors und der Schaltwalze einzurichten, ist eine Stirnradstufe vorgesehen.

Durch die Stirnradstufe ist ein vergleichsweise großer Bauraum erforderlich.

Bei dem eingangs genannten, aus der US-A-6,003,649 bekannten Kraftfahrzeugantriebsstrang ist ein Abschnitt einer Abtriebswelle des Elektromotors mit einem Schneckentriebabschnitt versehen, der unmittelbar mit dem Zahnrad der Schaltwalze in Eingriff steht.

Hierdurch kann der erforderliche Bauraum erheblich verringert werden. Eine Stirnradstufe zur Realisierung der erforderlichen Übersetzung ist nicht notwendig. Diese wird durch das Zusammenwirken von Schneckentriebabschnitt und Zahnrad der Schaltwalze realisiert.

Vor diesem Hintergrund ist es die Aufgabe der vorliegenden Erfindung, einen verbesserten automatisierten Kraftfahrzeugantriebsstrang anzugeben.

Diese Aufgabe wird durch einen automatisierten Kraftfahrzeugantriebsstrang gemäß Anspruch 1 gelöst, mit einer Anfahr- und Trennkupplung und einem Stufengetriebe, das eine Mehrzahl von Radsätzen zur formschlüssigen Bildung von Gangstufen aufweist, wobei das Stufengetriebe eine Aktuatoranordnung mit wenigstens einer Schaltwalze aufweist, die mit einem Zahnrad verbunden ist, das mit einem Elektromotor zum Drehantrieb der Schaltwalze gekoppelt ist, wobei ein Abschnitt einer Abtriebswelle des Elektromotors mit einem Schneckentriebabschnitt versehen ist, der unmittelbar mit dem Zahnrad der Schaltwalze in Eingriff steht, und wobei die Aktuatoranordnung wenigstens zwei Schaltwalzen aufweist.

Die Aufgabe wird auf diese Weise vollkommen gelöst.

Von besonderem Vorzug ist es, wenn das Zahnrad ein geradverzahntes Zahnrad ist.

Auf diese Weise ist es möglich, das Zahnrad vergleichsweise kostengünstig herzustellen.

Alternativ hierzu kann das Zahnrad auch schrägverzahnt sein.

Ferner ist es von Vorteil, wenn die Achsen der Schaltwalzen windschief und schrägwinklig zu der Achse des Elektromotors ausgerichtet ist.

Falls man den Winkel entsprechend der Steigung des Schneckentriebabschnittes wählt, läßt sich ein Kämmen des Schneckentriebabschnitts mit einem geradverzahnten Zahnrad der Schaltwalze ohne zwischengeschaltete Zahnräder besonders einfach realisieren.

Alternativ hierzu können die Schaltwalzenachsen in der Projektion auch senkrecht zu der Elektromotorachse ausgerichtet sein. In diesem Fall ist das Zahnrad der Schaltwalzen jeweils schrägverzahnt ausgebildet.

Von besonderem Vorzug ist es, wenn das Zahnrad spanlos hergestellt ist, insbesondere gesintert oder aus Kunststoff gespritzt oder in Blechtechnologie hergestellt ist.

Hierdurch läßt sich das Zahnrad, insbesondere mit Geradverzahnung, zum Drehantrieb der Schaltwalze besonders kostengünstig herstellen.

Insgesamt ist es von Vorzug, wenn die Schaltwalzen spanlos hergestellt, insbesondere gesintert sind, und/oder ein Zahnrad jeweils einstückig mit einer Schaltwalze ausgebildet ist.

Dies reduziert weiter die Herstellungskosten.

Dabei ist es besonders bevorzugt, wenn die Schaltwalzen koaxial zueinander angeordnet sind.

Hierdurch kann insgesamt eine kompakte Bauweise der Aktuatoranordnung erzielt werden.

Ferner ist es von Vorteil, wenn jede Schaltwalze genau eine Umfangsspur aufweist.

Hierdurch lassen sich die Schaltwalzen ebenfalls besonders kostengünstig herstellen. Beispielsweise kann jede Schaltwalze aus zwei Hälften spanlos hergestellt (z.B. gesintert) werden, die anschließend unter der Ausbildung der einen Umfangsspur bzw. -nut zusammen gesintert oder sonst wie gefügt werden.

Dabei ist es von besonderem Vorzug, wenn in die Umfangsspur von wenigstens einer Schaltwalze wenigstens zwei Führungselemente greifen, die unterschiedliche Schaltmuffen zum Ein- und Auslegen von Gangstufen des Stufengetriebes betätigen.

Hierdurch ist eine große Anzahl von Gängen, bspw. sechs Vorwärtsgänge und ein Rückwärtsgang, mit nur zwei Schaltwalzen realisierbar, die jeweils nur eine Umfangsspur aufweisen.

Von besonderem Vorzug ist es, wenn die Schaltwalzen jeweils von einem separaten Elektromotor angetrieben sind.

Hierdurch werden große Freiheitsgrade bezüglich der Schaltstrategie realisiert. Dabei ist es von Vorteil, wenn die Elektromotoren parallel zueinander ausgerichtet sind.

Hierdurch läßt sich die Aktuatoranordnung mit einem geringen Bauraum realisieren.

Gemäß einer weiteren bevorzugten Ausführungsform sind der einen Schaltwalze die Vorwärtsgangstufen 1,3 und der anderen Schaltwalze die Vorwärtsgangstufen 2,4 zugeordnet.

Auf diese Weise ist für die ersten vier Gänge bei Gangwechsel von einer Gangstufe zur unmittelbar nächsten Gangstufe gewährleistet, daß das Auslegen der alten Gangstufe und das Einlegen der neuen Gangstufe nicht von der gleichen Schaltwalze gesteuert werden. Idealerweise sind einer Schaltwalze sämtliche ungeraden Vorwärtsgänge zugeordnet (z.B. 1, 3, 5), der anderen Schaltwalze die geraden Vorwärtsgänge (2, 4, 6).

Hierdurch ergeben sich insgesamt große Freiheitsgrade bezüglich der Steuerung des Antriebsstranges.

Von besonderem Vorzug ist es, wenn die Aktuatoranordnung die Schaltwalzen so ansteuert, daß wenigstens zwei aufeinanderfolgende Gangstufen in überschneidender Art und Weise gewechselt werden.

Vorzugsweise ist es so, daß der einen Gangstufe überwiegend die ungeraden und der anderen Schaltwalze überwiegend die geraden Gangstufen zugeordnet sind. Auf diese Weise lassen sich sämtliche oder nahezu sämtliche aufeinanderfolgenden Gangstufen in überschneidender Art und Weise wechseln.

Gemäß einer weiteren bevorzugten Ausführungsform ist den Schaltwalzen jeweils ein Positionssensor zur Erfassung der Schaltwalzendrehposition zugeordnet.

Dies ermöglicht beispielsweise, die jeweiligen Drehpositionen durch eine exakte Lageregelung anzufahren.

Dabei ist es von Vorzug, wenn der Positionssensor eine Schaltwalzenfläche mit axialer Steigung und einen daran angreifenden Hebelsensor aufweist, der aufgrund der axialen Steigung je nach Schaltwalzendrehwinkel unterschiedlich ausgelenkt wird.

Alternativ hierzu kann der Positionssensor auch berührungslos arbeiten. Auch ist es denkbar, eine Schaltwalzenfläche mit radialer Steigung vorzusehen, an der ein Hebelsensor angreift.

Insgesamt ist es ferner bevorzugt, wenn der Elektromotor außerhalb des Gehäuses des Stufengetriebes angeordnet ist und wenn die Abtriebswelle eine Öffnung des Gehäuses des Stufengetriebes durchsetzt.

Dies ermöglicht eine saubere Trennung zwischen den trockenen elektrischen Komponenten der Aktuatoranordnung und den "nassen" Komponenten, die eine Schmierung benötigen.

Dabei ist es ferner von Vorzug, wenn die Abtriebswelle einseitig im Gehäuse des Stufengetriebes gelagert ist.

Dies ist vorzugsweise der Endabschnitt der Abtriebswelle, so daß der Schneckentriebabschnitt zwischen der Lagerung der Abtriebswelle im Elektromotor und der Lagerung der Abtriebswelle im Gehäuse des Stufengetriebes vorgesehen ist. Dies ermöglicht insgesamt, die Schaltwalzen mit einer hohen Dynamik anzusteuern, da immer ein sicherer Eingriff des Schneckentriebabschnittes in das Zahnrad der Schaltwalze gewährleistet ist.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines erfindungsgemäßen automatisierten Kraftfahrzeugantriebsstranges;
- Fig. 2: eine perspektivische Ansicht einer Aktuatoranordnung des Antriebsstranges der Fig. 1;
- Fig. 3: eine schematische Schnittansicht der Aktuatoranordnung der Fig. 3; und
- Fig. 4: Abwicklungen der Umfangsspuren der zwei Schaltwalzen der Aktuatoranordnung der Fig. 2 und 3.

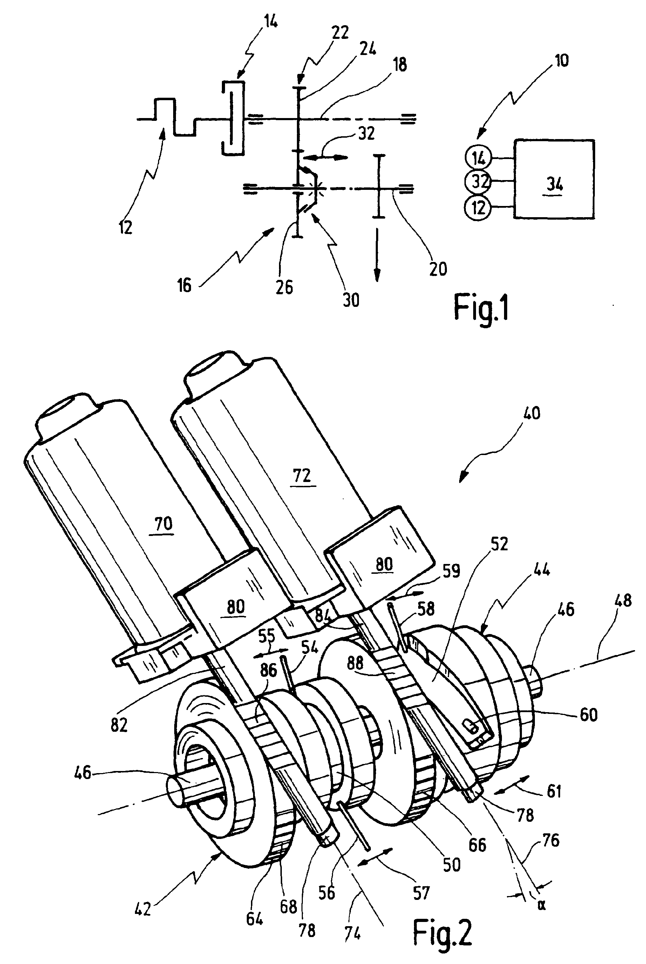

In Fig. 1 ist ein erfindungsgemäßer Antriebsstrang für ein Kraftfahrzeug generell mit 10 bezeichnet. Der Antriebsstrang 10 beinhaltet in herkömmlicher Weise einen Verbrennungsmotor 12, eine Anfahr- und Trennkupplung 14 sowie ein Stufengetriebe 16.

Das Stufengetriebe 16 weist eine Eingangswelle 18 auf, die mit dem Ausgang der Trennkupplung 14 verbunden ist. Ferner weist das Stufengetriebe 16 eine Ausgangswelle 20 auf, die formschlüssig mit Antriebsrädern des Kraftfahrzeuges gekoppelt ist, in welchem der Antriebsstrang 10 eingebaut ist.

In der dargestellten Ausführungsform ist das Stufengetriebe 16 als Getriebe für den Front-Quereinbau ausgelegt. Es versteht sich jedoch, daß stattdessen das Stufengetriebe auch in klassischer Bauweise für heckangetriebene Fahrezeuge mit Motor vorne realisiert sein kann.

Ferner versteht sich, daß der Antriebsstrang auch mit einem Doppelkupplungsgetriebe realisiert sein kann, das zwei Trennkupplungen für zwei getrennte Kraftübertragungszweige aufweist.

In dem Stufengetriebe 16 ist eine Mehrzahl von Radsätzen 22 vorgesehen, die jeweils einer Gangstufe zugeordnet sind und in der Regel ein Festrad 24 und ein Losrad 26 aufweisen.

Das Losrad 26 ist über eine schematisch bei 30 gezeigte Schaltkupplung mit der Welle verbindbar, an der das Losrad 26 gelagert ist. Im Falle der Darstellung der Fig. 1 ist die Schaltkupplung 30 dazu ausgelegt, ein an der Ausgangswelle 20 gelagertes Losrad 26 formschlüssig mit dieser zu verbinden oder von dieser zu entkoppeln. Die Schaltkupplungen können jeweils mit oder ohne Synchronisierungsmittel ausgebildet sein, sind aber vorzugsweise als Synchroneinheiten aufgebaut.

Zum Schalten wird ein Schaltelement wie eine Schaltmuffe in axialer Richtung bewegt, was in Fig. 1 bei 32 angedeutet ist.

Der Antriebsstrang 10 ist als automatisierter Antriebsstrang ausgebildet. Zu diesem Zweck ist eine schematisch bei 34 gezeigte Steuervorrichtung vorgesehen, die die Trennkupplung 14 sowie die Mehrzahl von Schaltkupplungen 30 als auch ggf. den Verbrennungsmotor 12 ansteuert.

Moderne automatisierte Antriebsstränge 10 der dargestellten Art weisen sechs oder mehr Vorwärtsgangstufen und wenigstens eine Rückwärtsgangstufe auf. Die Trennkupplung 14 und die Schaltkupplungen 30 werden über geeignete Aktuatoren angesteuert, so daß Gangwechsel in Abhängigkeit von den Randbedingungen des Fahrbetriebes automatisch erfolgen können oder auf unmittelbare Anforderung des Fahrers hin. Etwaige Schaltwünsche des Fahrers werden auf elektrischem Wege zu der Steuervorrichtung 34 übertragen und in geeignete Ansteuerbefehle für die Aktuatoren der Trennkupplung 14 und der Schaltkupplungen 30 umgesetzt.

Der Antriebsstrang 10 weist eine Aktuatoranordnung 40 auf, die in weitgehend schematischer Darstellung perspektivisch in Fig. 2 gezeigt ist.

Die Aktuatoranordnung 40 ist dazu ausgelegt, sämtliche Schaltkupplungen 30 des Stufengetriebes 16 anzusteuern, das im vorliegenden Fall sechs Vorwärtsgangstufen und eine Rückwärtsgangstufe aufweist.

Die Aktuatoranordnung 40 weist zwei Schaltwalzen 42, 44 auf, die koaxial hintereinander an einer Schaltwalzenwelle 46 drehbar gelagert sind.

Die Schaltwalzenwelle 46 ist entlang einer Achse 48 ausgerichtet.

Die Schaltwalze 42 weist eine einzelne Umfangsspur 50 auf. Die Schaltwalze 44 weist eine einzelne Umfangsspur 52 auf.

In die Umfangsspur 50 greift ein axial verschiebliches Führungselement 54 und Drehbewegungen der Schaltwalze 42 werden folglich in Axialbewegungen des Führungselementes 54 umgesetzt, was schematisch bei 55 gezeigt ist. Das Führungselement 54 ist mit einer Schaltmuffe gekoppelt, die Schaltkupplungen für den ersten und den dritten Gang betätigt.

An einem anderen Umfangsabschnitt der Schaltwalze 42 greift ein weiteres Führungselement 56 in die Umfangsspur 50 ein. Entsprechende Schaltbewegungen 57 des Führungselementes 56 bewegen eine Schaltmuffe, die Schaltkupplungen für den fünften und den sechsten Gang bedient.

In die Umfangsspur 52 der Schaltwalze 44 greifen ebenfalls zwei Führungselemente 58,60. Das Führungselement 58 vollzieht bei Drehungen der Schaltwalze 44 Axialbewegungen 59. Das Führungselement 58 ist mit einer Schaltmuffe zum Betätigen des Rückwärtsganges gekoppelt.

Entsprechend führen Schaltbewegungen 61 des Führungselementes 60 zu Axialbewegungen einer Schaltmuffe, die Schaltkupplungen für den zweiten bzw. den vierten Gang betätigt.

Die Schaltwalze 42 ist einstückig mit einem Zahnrad 64 verbunden, dessen Zähne schematisch bei 68 gezeigt sind. Die Verzahnung des Zahnrades 64 ist als Geradverzahnung ausgeführt.

Entsprechend ist die Schaltwalze 44 einstückig mit einem geradverzahnten Zahnrad 66 verbunden.

Ein Elektromotor 70 ist der Schaltwalze 42 zugeordnet. Entsprechend ist ein Elektromotor 72 der Schaltwalze 44 zugeordnet.

Der Elektromotor 70 weist eine Abtriebswelle 82 auf, deren Achse 74 windschief zu der Achse 48 ausgerichtet ist. Entsprechend weist der Elektromotor 72 eine Abtriebswelle 84 auf, deren Achse 76 windschief zu der Achse 48 ausgerichtet ist. Die Achsen 74, 76 verlaufen parallel zueinander.

An den Enden der Abtriebswellen 82, 84 ist jeweils ein Lagerstummel 78 vorgesehen.

Die Elektromotoren 70, 72 sind außen an einem Getriebegehäuse 80 des Stufengetriebes 16 angeflanscht. Die Abtriebswellen 82, 84 durchsetzen das Getriebegehäuse 80. Die Lagerstummel 78 sind, was in Fig. 2 nicht näher dargestellt ist, ebenfalls an dem Getriebegehäuse 80 drehbar gelagert.

In einem mittleren Bereich weisen die Abtriebswellen 82, 84 jeweils einen Schneckentriebabschnitt 86 bzw. 88 auf.

Die Schneckentriebabschnitte 86, 88 sind jeweils unmittelbar an den Abtriebswellen 82, 84 vorgesehen, vorzugsweise einstückig.

Die Schneckentriebabschnitte 86, 88 kämmen jeweils unmittelbar mit den Zahnrädern 64 bzw. 66. Durch die windschiefe Anordnung zwischen den Achsen 74, 76 einerseits und der Achse 48 andererseits ist es möglich, die Schneckentriebabschnitte 86, 88 unmittelbar mit den geradverzahnten Zahnnrädern 64, 66 kämmen zu lassen. Es versteht sich dabei, daß die Steigung der Schneckentriebabschnitte 86, 88 an den Winkel zwischen den Achsen 74, 76 und der Achse 48 angepaßt sein muß.

Die Schaltwalzen 42, 44 mit den einstückig daran angeformten Zahnrädern 64, 66 können bspw. hergestellt werden, indem jeweils zwei Teile vorgesintert werden, von denen eines das jeweilige Zahnrad beinhaltet. Durch Zusammenfügen und Fertigsintern wird dann die jeweilige Umfangsspur 50, 52 ausgebildet, die jeweils als Radialnut ausgebildet sind. Mit anderen Worten liegt bei dieser Fertigungsweise die Trennlinie zwischen den vorgesinterten Teilen im Bereich der Umfangsspur 50 bzw. 52.

Alternativ ist es natürlich auch möglich, die Schaltwalzen 42, 44 getrennt von den Zahnrädern 64, 66 herzustellen. Vorzugsweise werden jedoch die Schaltwalzen 42, 44 und die Zahnräder 64, 66 jeweils spanlos hergestellt, insbesondere gesintert oder aus Kunststoff gespritzt oder in Blechtechnologie hergestellt.

Die Steuervorrichtung 34 steuert die zwei Elektromotoren 70, 72 getrennt voneinander an.

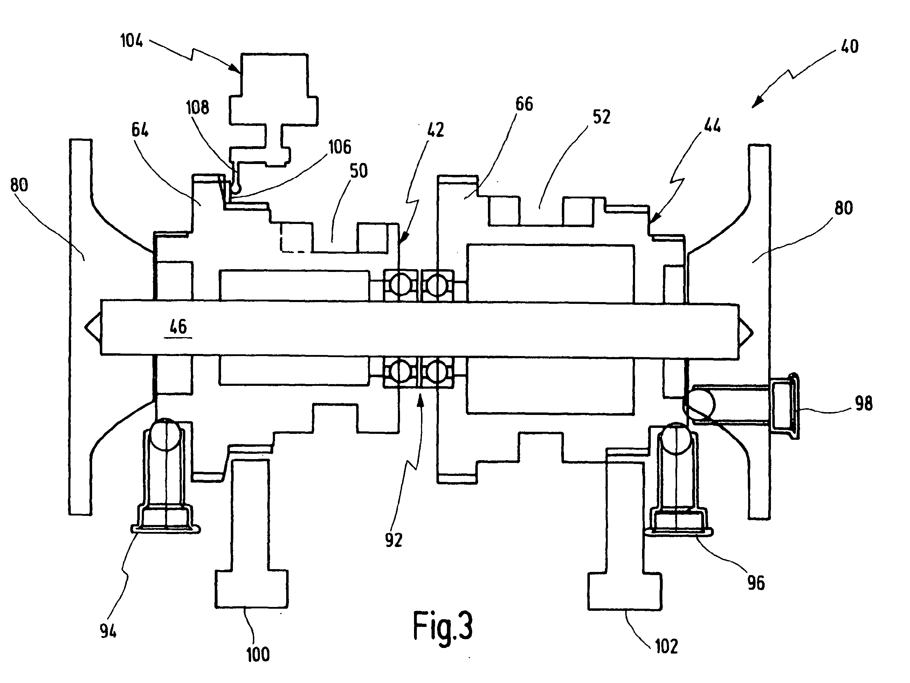

In Fig. 3 ist eine schematische Schnittansicht im wesentlichen entlang einer Ebene durch die Achse 48 gezeigt.

Es ist zu erkennen, daß an der Schaltwalzenwelle 46 zwischen den zwei Schaltwalzen 42, 44 eine Axiallageranordnung 92 vorgesehen ist.

An den beiden äußeren Enden ist die Schaltwalzenwelle 46 jeweils im Getriebegehäuse 80 gelagert. Die Lagerung ist dabei so, daß Axialkräfte über geeignete Axiallager von dem Getriebegehäuse 80 aufgenommen werden.

Jeder der zwei Schaltwalzen 42, 44 sind Arretierungsmittel 94 bzw. 96 zugeordnet. Diese Arretierungsmittel 94, 96 beinhalten eine radiale Kontur an der jeweiligen Schaltwalze 42, 44 und eine sich an dem Getriebegehäuse 80 abstützende Kugel-Rastanordnung. Eine federvorbelastete Kugel greift an der Radialkontur an. Die Radialkonturen der Schaltwalzen 42, 44 sind so gewählt, daß die Schaltwalzen in vorbestimmten Rastpositionen arretiert werden, auf die nachstehend noch eingegangen werden wird.

Bei 98 ist eine alternative Ausführungsform von Arretierungsmitteln gezeigt, die eine Kontur an einer Axialfläche der Schaltwalze 44 beinhaltet und ein entsprechend axial ausgerichtetes Kugel-Rastelement. Anstelle von Kugel-Rastelementen können auch Blattfeder-Rastelemente vorgesehen sein.

Ferner ist der Schaltwalze 42 ein berührungsloser Positionssensor 100 zugeordnet, der die Drehpositon der Schaltwalze 42 erfaßt und diese an die Steuervorrichtung 34 weitergibt. Entsprechend ist der Schaltwalze 44 ein berührungsloser Positionssensor 102 zugeordnet.

Eine alternative Ausführungsform eines Positionssensors ist bei 104 gezeigt. Der Positionssensor 104 weist einen Hebelsensor 108 auf, der an einer axial ausgerichteten Steigungsfläche 106 angreift. Je nach Drehposition der Schaltwalze wird der Hebelsensor 108 unterschiedlich ausgelenkt. Diese Auslenkung wird an die Steuervorrichtung 34 übermittelt.

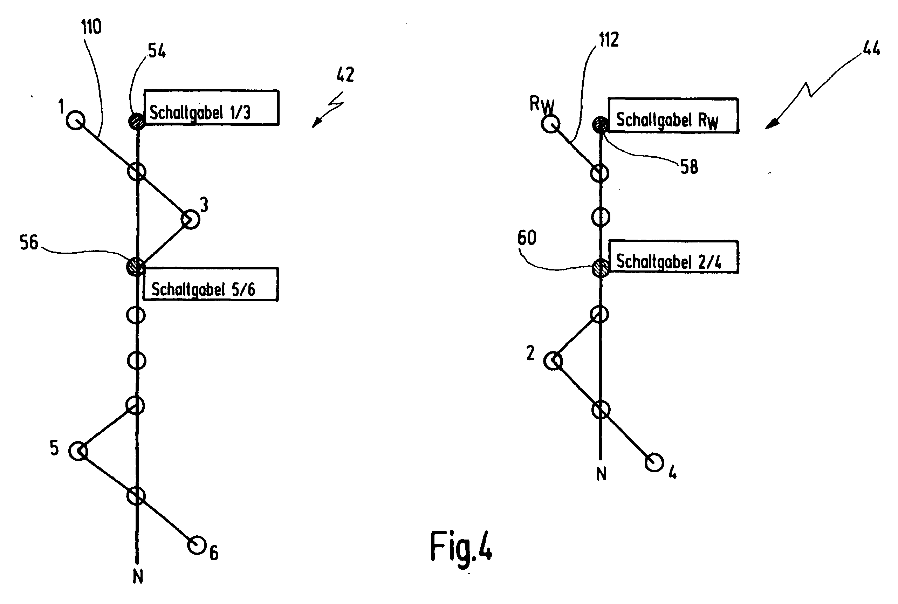

In Fig. 4 sind eine Abwicklung 110 der Umfangsspur 50 und eine Abwicklung 112 der Umfangsspur 52 dargestellt.

Die Umfangsspuren 110, 112 weisen jeweils eine Neutrallinie N auf. Sofern sich ein Führungselement 54-60 auf der Neutrallinie N befindet, ist keine der dem jeweiligen Führungselement 54-60 zugeordneten Schaltkupplungen 30 geschaltet.

In den Abwicklungen 110, 112 sind die mittels der Arretierungsmittel 92, 94 erzielbaren Rastpositionen durch Kreise angedeutet. Die Führungselemente 54, 56 sind um zwei Rastpositionen voneinander getrennt. In der Darstellung der Fig. 4 ist der erste Gang eingelegt. Denn das Führungselement 54 befindet sich auf der Höhe der Rastposition "1". Das Führungselement 56 hingegen befindet sich auf der Neutrallinie N.

Durch ein Verdrehen der Schaltwalze 42 in die nächste Raststellung wird der erste Gang ausgelegt. Keiner der anderen Gänge 3, 5, 6, die dieser Schaltwalze zugeordnet sind, wird eingelegt. In der nächsten Raststellung wird der dritte Gang 3 eingelegt, in der nächsten Raststellung, jeweils bei gleicher Drehrichtung, wieder die Neutralstellung. Anschließend wird der fünfte Gang 5 eingelegt, dann wieder eine Neutralstellung, schließlich der sechste Gang 6.

Die Abwicklung 112 der Umfangsspur 52 der Schaltwalze 44 ist prinzipiell ähnlich aufgebaut. An einem äußersten Ende ist eine Rastposition für den Rückwärtsgang R_{w} vorgesehen. In der Darstellung der Fig. 4 ist der Rückwärtsgang eingelegt. Durch Verdrehen der Schaltwalze 44 wird als nächstes die Neutralstellung angewählt, in der nächsten Position der zweite Gang 2, in der folgenden Rastposition wieder die Neutralstellung, und schließlich der vierte Gang 4.

Man erkennt, daß die Vorwärtsgänge so auf die zwei Schaltwalzen 42, 44 verteilt sind, daß die Vorwärtsgänge 1, 3, 5 der Schaltwalze 42 und die Vorwärtsgänge 2 und 4 der Schaltwalze 44 zugeordnet sind.

Durch geeignete Ansteuerung der zwei Elektromotoren 70, 72 lassen sich die Gangstufen 1 bis 5 so ein- und auslegen, daß Gangwechsel von unmittelbar aufeinanderfolgenden Gangstufen in überschneidender Art und Weise gewechselt werden.

Dies ist insbesondere für die niedrigen Gangstufen von Bedeutung, da hierdurch Zugkrafteinbrüche bei Gangwechseln verringert werden können.

Die sich überschneidenden Gangwechsel bei den niedrigen Gangstufen haben ferner den Vorteil kürzerer Schaltzeiten.

Die Gänge 5 und 6 sind hingegen derselben Schaltwalze 42 zugeordnet. Gangwechsel von 5 nach 6 und zurück erfolgen folglich rein sequentiell, unter zwischenzeitlichem Anfahren der Neutralposition. Für die beiden höheren Gänge 5, 6 ist dies nicht von besonderem Nachteil, da sich der Zugkrafteinbruch bei höheren Gangwechseln nicht so bemerkbar macht.

Insgesamt läßt sich die Aktuatoranordnung 40 mit nur zwei Verzahnungsteilen pro Schaltwalze realisieren, nämlich dem jeweiligen Schneckentriebabschnitt 86, 88 und den jeweiligen Zahnrädern 64, 66.

Durch die parallel angeordneten Elektromotoren ergibt sich für das Getriebegehäuse 80 die gleiche Bearbeitungsrichtung, so daß das Getriebegehäuse 80 kostengünstiger hergestellt werden kann.

## Patentansprüche

1. Automatisierter Kraftfahrzeugantriebsstrang (10), mit einer Anfahr- und Trennkupplung (14) und einem Stufengetriebe (16), das eine Mehrzahl von Radsätzen (22) zur formschlüssigen Bildung von Gangstufen (1-6, R) aufweist, wobei das Stufengetriebe (16) eine Aktuatoranordnung (40) mit wenigstens einer Schaltwalze (42,44) aufweist, die mit einem Zahnrad (64,66) verbunden ist, das mit einem Elektromotor (70,72) zum Drehantrieb der Schaltwalze (42,44) gekoppelt ist, wobei ein Abschnitt einer Abtriebswelle (82,84) des Elektromotors (70,72) mit einem Schneckentriebabschnitt (86,88) versehen ist, der unmittelbar mit dem Zahnrad (64,66) der Schaltwalze (42,44) in Eingriff steht, **dadurch gekennzeichnet, daß** die Aktuatoranordnung (40) wenigstens zwei Schaltwalzen (42,44) aufweist.

2. Antriebsstrang nach Anspruch 1, **dadurch gekennzeichnet, daß** das Zahnrad (64,66) ein geradverzahntes Zahnrad (64,66) ist.

3. Antriebsstrang nach Anspruch 1 oder 2, **dadurch gekennzeichnet, daß** die Achse (48) der Schaltwalzen (42,44) windschief und schrägwinklig zu der Achse (74,76) des Elektromotors (70,72) ausgerichtet ist.

4. Antriebsstrang nach einem der Ansprüche 1 - 3, **dadurch gekennzeichnet, daß** das Zahnrad (64,66) spanlos hergestellt ist, insbesondere gesintert oder aus Kunststoff gespritzt oder in Blechtechnologie hergestellt ist.

5. Antriebsstrang nach einem der Ansprüche 1 - 4, **dadurch gekennzeichnet, daß** die Schaltwalzen (42,44) spanlos hergestellt, insbesondere gesintert sind und Zahnräder (64,66) jeweils einstückig mit den Schaltwalzen (42,44) ausgebildet sind.

6. Antriebsstrang nach einem der Ansprüche 1 - 5, **dadurch gekennzeichnet, daß** die Schaltwalzen (42,44) koaxial zueinander angeordnet sind.

7. Antriebsstrang nach einem der Ansprüche 1 - 6, **dadurch gekennzeichnet, daß** jede Schaltwalze (42,44) genau eine Umfangsspur (50, 52) aufweist.

8. Antriebsstrang nach Anspruch 7, **dadurch gekennzeichnet, daß** in die Umfangsspur (50,52) von wenigstens einer Schaltwalze (42,44) wenigstens zwei Führungselemente (54,56 bzw. 58,60) greifen, die unterschiedliche Schaltmuffen zum Ein- und Auslegen von Gangstufen (1-6, R) des Stufengetriebes (16) betätigen.

9. Antriebsstrang nach einem der Ansprüche 1 - 8, **dadurch gekennzeichnet, daß** die Schaltwalzen (42,44) jeweils von einem separaten Elektromotor (70,72) angetrieben sind.

10. Antriebsstrang nach Anspruch 9, **dadurch gekennzeichnet, daß** die Elektromotoren (70,72) parallel zueinander ausgerichtet sind.

11. Antriebsstrang nach einem der Ansprüche 1 - 10, **dadurch gekennzeichnet, daß** der einen Schaltwalze (42) die Vorwärtsgangstufen 1,3 und der anderen Schaltwalze (44) die Vorwärtsgangstufen 2,4 zugeordnet sind.

12. Antriebsstrang nach Anspruch 11, **dadurch gekennzeichnet, daß** die Aktuatoranordnung (40) die Schaltwalzen (42,44) so ansteuert, daß wenigstens zwei aufeinanderfolgende Gangstufen in überschneidender Art und Weise gewechselt werden.

13. Antriebsstrang nach einem der Ansprüche 1 - 12, **dadurch gekennzeichnet, daß** den Schaltwalzen (42,44) jeweils ein Positionssensor (100,102;104) zur Erfassung der Schaltwalzendrehposition zugeordnet ist.

14. Antriebsstrang nach Anspruch 13, **dadurch gekennzeichnet, daß** der Positionssensor (104) eine Schaltwalzenfläche (106) mit axialer Steigung und einen daran angreifenden Hebelsensor (108) aufweist, der aufgrund der axialen Steigung je nach Schaltwalzendrehwinkel unterschiedlich ausgelenkt wird.

15. Antriebsstrang nach einem der Ansprüche 1 - 14, **dadurch gekennzeichnet, daß** der Elektromotor (70,72) außerhalb des Gehäuses (80) des Stufengetriebes (16) angeordnet ist und die Abtriebswelle (82,84) eine Öffnung des Gehäuses (80) des Stufengetriebes (16) durchsetzt.

16. Antriebsstrang nach Anspruch 15, **dadurch gekennzeichnet, daß** die Abtriebswelle (82, 84) einseitig (bei 78) im Gehäuse (80) des Stufengetriebes (16) gelagert ist.

## Claims

1. Automated motor vehicle drive train (10) having a starting and disconnector-type clutch (14) and a multi-step transmission (16) which has a plurality of wheel sets (22) for forming gear speed stages (1-6, R) in a positively locking fashion, the multi-step transmission (16) having an actuator arrangement (40) with at least one selector drum (42, 44) which is connected to a gear wheel (64, 66) which is coupled to an electric motor (70, 72) for driving the selector drum (42, 44) in rotation, one section of an output shaft (82, 84) of the electric motor (70, 72) being provided with a worm drive section (86, 88) which engages directly with the gear wheel (64, 66) of the selector drum (42, 44), **characterized in that** the actuator arrangement (40) has at least two selector drums (42, 44).

2. Drive train according to Claim 1, **characterized in that** the gear wheel (64, 66) is an straight spur toothed gear wheel (64, 66).

3. Drive train according to Claim 1 or 2, **characterized in that** the axis (48) of the selector drums (42, 44) is oriented skewed and at an oblique angle with respect to the axis (74, 76) of the electric motor (70, 72).

4. Drive train according to one of Claims 1-3, **characterized in that** the gear wheel (64, 66) is manufactured in a non-metal cutting fashion, in particular is sintered or is injection moulded from plastic or is manufactured using sheet metal technology.

5. Drive train according to one of Claims 1-4, **characterized in that** the selector drums (42, 44) are manufactured in a non-metal cutting fashion, in particular are sintered, and gear wheels (64, 66) are formed in each case in one piece with the selector drums (42, 44).

6. Drive train according to one of Claims 1-5, **characterized in that** the selector drums (42, 44) are arranged coaxially with respect to one another.

7. Drive train according to one of Claims 1-6, **characterized in that** each selector drum (42, 44) has precisely one circumferential track (50, 52).

8. Drive train according to Claim 7, **characterized in that** at least two guide elements (54, 56 and 58, 60) engage in the circumferential track (50, 52) of at least one selector drum (42, 44) and activate different gear shift sleeves for engaging and disengaging gear speed stages (1-6, R) of the multi-step transmission (16).

9. Drive train according to one of Claims 1-8, **characterized in that** the selector drums (42, 44) are each driven by a separate electric motor (70, 72).

10. Drive train according to Claim 9, **characterized in that** the electric motors (70, 72) are oriented in parallel with one another.

11. Drive train according to one of Claims 1-10, **characterized in that** the forward gear speed stages 1, 3 are assigned to one selector drum (42), and the forward gear speed stages 2, 4 are assigned to the other selector drum (44).

12. Drive train according to Claim 11, **characterized in that** the actuator arrangement (40) actuates the selector drums (42, 44) in such a way that at least two successive gear speed stages are changed in an overlapping fashion.

13. Drive train according to one of Claims 1-12, **characterized in that** the selector drums (42, 44) are each assigned a position sensor (100, 102; 104) for sensing the rotational position of the selector drum.

14. Drive train according to Claim 13, **characterized in that** the position sensor (104) has a selector drum surface (106) with an axial positive gradient and a lever sensor (108) which engages thereon and is deflected in different ways owing to the axial positive gradient, depending on the rotational angle of the selector drum.

15. Drive train according to one of Claims 1- 14, **characterized in that** the electric motor (70, 72) is arranged outside the housing (80) of the multi-step transmission (16), and the output shaft (82, 84) penetrates an opening in the housing (80) of the multi-step transmission (16).

16. Drive train according to Claim 15, **characterized in that** the output shaft (82, 84) is mounted on one side (at 78) in the housing (80) of the multi-step transmission (16).

## Revendications

1. Transmission automatique (10) pour véhicule automobile, comprenant un accouplement d'embrayage et de débrayage (14) et une boîte de vitesses étagée (16) comportant une pluralité d'essieux montés (22) pour la formation de vitesses (1 à 6, R) par crabotage, la boîte de vitesses étagée (16) comportant un dispositif actionneur (40) ayant au moins un tambour de commande (42, 44) raccordé à un pignon (64, 66), lequel est couplé par un moteur électrique (70, 72) à l'entraînement en rotation du tambour de commande (42, 44), une partie d'un arbre de sortie (82, 84) du moteur électrique (70, 72) étant pourvue d'un segment de transmission à vis sans fin (86, 88) directement engrené avec le pignon (64, 66) du tambour de commande (42, 44), **caractérisée en ce que** le dispositif actionneur (40) comprend au moins deux tambours de commande (42, 44).

2. Transmission selon la revendication 1, **caractérisée en ce que** le pignon (64, 66) est un pignon à denture droite (64, 66).

3. Transmission selon la revendication 1 ou 2, **caractérisée en ce que** l'axe (48) des tambours de commande (42, 44) est voilé et oblique par rapport à l'axe (74, 76) du moteur électrique (70, 72).

4. Transmission selon l'une des revendications 1 à 3, **caractérisée en ce que** le pignon (64, 66) est réalisé sans enlèvement de copeaux, en étant notamment fritté ou en plastique moulé par injection ou fabriqué par travail de tôle.

5. Transmission selon l'une des revendications 1 à 4, **caractérisée en ce que** les tambours de commande (42, 44) sont réalisés sans enlèvement de copeaux, en étant notamment frittés, et **en ce que** les pignons (64, 66) sont formés d'un seul tenant avec les tambours de commande (42, 44).

6. Transmission selon l'une des revendications 1 à 5, **caractérisée en ce que** les tambours de commande (42, 44) sont disposés coaxialement l'un à l'autre.

7. Transmission selon l'une des revendications 1 à 6, **caractérisée en ce que** chaque tambour de commande (42, 44) comprend exactement une voie circonférentielle (50, 52).

8. Transmission selon la revendication 7, **caractérisée en ce qu'**au moins deux éléments de guidage (54, 56 ou 58, 60) s'engagent dans la voie circonférentielle (50, 52) d'au moins un tambour de commande (42, 44), lesquels manoeuvrent différents manchons de commande pour le passage et la rétrogradation de vitesses (1 à 6, R) de la boîte de vitesses étagée (16).

9. Transmission selon l'une des revendications 1 à 8, **caractérisée en ce que** les tambours de commande (42, 44) sont entraînés chacun par un moteur électrique séparé (70, 72).

10. Transmission selon la revendication 9, **caractérisée en ce que** les moteurs électriques (70, 72) sont disposés parallèlement l'un à l'autre.

11. Transmission selon l'une des revendications 1 à 10, **caractérisée en ce que** les vitesses de marche avant 1, 3 sont affectées au premier tambour de commande (42), et les vitesses de marche avant 2, 4 au deuxième tambour de commande (44).

12. Transmission selon la revendication 11, **caractérisée en ce que** le dispositif actionneur (40) actionne les tambours de commande (42, 44) de sorte qu'au moins deux vitesses successives soient passées par chevauchement et soient changées de cette manière.

13. Transmission selon l'une des revendications 1 à 12, **caractérisée en ce qu'**un capteur de position (100, 102 ; 104) est affecté à chacun des tambours de commande (42, 44) pour la saisie de position de rotation du tambour de commande.

14. Transmission selon la revendication 13, **caractérisée en ce que** le capteur de position (104) présente une surface de tambour de commande (106) à inclinaison axiale et un capteur à levier (108) appliqué contre celle-ci, dévié suivant l'inclinaison axiale en fonction de l'angle de rotation du tambour de commande.

15. Transmission selon l'une des revendications 1 à 14, **caractérisée en ce que** le moteur électrique (70, 72) est disposé à l'extérieur du carter (80) de la boîte de vitesses étagée (16), et **en ce que** l'arbre de sortie (82, 84) traverse une ouverture du carter (80) de la boîte de vitesses étagée (16).

16. Transmission selon la revendication 15, **caractérisée en ce que** l'arbre de sortie (82, 84) est monté unilatéralement (vers 78) dans le carter (80) de la boîte de vitesses étagée (16).
